# EUROPEAN PATENT SPECIFICATION

(11) **EP 1 619 940 B1**
(45) Date of publication and mention of the grant of the patent: **21.04.2010**
(21) Application number: 04731194.9
(22) Date of filing: 05.05.2004
(51) Int. Cl.: A01G 23/06

(54) **STUMP GRUBBER, ITS USE, METHOD FOR GRUBBING STUMPS AND METHOD FOR PREVENTING FUNGUS DISEASE SUCH AS ROOT ROT**
WURZELREISSER, SEINE VERWENDUNG, VERFAHREN ZUM AUSGRABEN VON BAUMSTÜMPFEN UND VERFAHREN ZUR VERHINDERUNG VON FUNGUS-ERKRANKUNGEN WIE ZUM BEISPIEL WURZELFÄULE
ESSOUCHEUSE, SON UTILISATION, PROCEDE D'ESSOUCHEMENT ET PROCEDE POUR PREVENIR DES MALADIES FONGIQUES TELLES QUE LE POURRIDIE

(30) Priority: 05.05.2003 FI 20030674; 10.07.2003 FI 20031051
(43) Date of publication of application: 01.02.2006
(73) Proprietor: OY Kappelinranta-Kapelstrand AB, 21630 Lielax (FI)
(72) Inventor: JÄRVINEN, Markku, FI-21630 Lielax (FI); SAARIO, Reijo, FI-20780 Kaarina (FI); SAARIO, Janne, FI-20880 Turku (FI)
(74) Representative: Maskula, Silla Marjatta
(86) International application number: PCT/FI2004/000273
(87) International publication number: WO 2004/098268

(56) References cited:
- CA-A1- 2 087 323
- SE-B- 452 696
- US-A- 4 141 398
- DATABASE WPI Week 197436, Derwent Publications Ltd., London, GB; Class P13, AN 1974-H7468V, XP002994074 & SU 397 172 A (KARELA FORESTRY RES INS) 14 February 1974
- DATABASE WPI Week 198825, Derwent Publications Ltd., London, GB; Class P13, AN 1988-005359, XP002994075 & SU 1 311 664 A (UKR AGRIC ACAD) 23 May 1987

## Description

### TECHNICAL FIELD OF THE INVENTION

The present invention relates to a grubber, its use in preventing root rot, and a method for grubbing stumps in accordance with the preambles to the independent claims presented below. The invention relates in particular to a novel way of extracting stumps from the ground, for example, with an attachment fitted to a log forwarder.

### PRIOR ART

Pulling tree stumps quickly out of the ground is difficult, for example due to the highly variable quality of the stumps. Among other factors, the size and hardness of the stumps vary greatly, as does the force with which the roots cling to the soil. There are several reasons for removing stumps from a forest. If a logged forest is reforested or if the land is used for housing construction, for example, it would be preferable to remove the stumps. Stump removal using the methods currently in use is complicated, slow and therefore expensive. Due to their root systems, stumps are generally extremely tightly rooted in the soil. Mechanised methods currently in use are mainly based on extracting the stump with the lifting means of a machine that grips the stump. Grubbing stumps therefore requires heavy machinery that has high lifting power and often limited mobility in the forest. The movements of large machinery, such as excavators, cause damage for example to trees left standing and their root systems. Due to the poor mobility and slowness of the equipment currently applicable for stump grubbing, the removal of stumps from harvested forests is generally unprofitable. According to some estimation, the amount of stumps annually left unutilised, for example in Finland, currently corresponds to approx. 10-15 million cubic metres of wood that could be combusted, for example, to produce thermal or electric energy, or otherwise be utilised.

If a tree stump, in addition to the stump part proper, is defined as including a root part comprising roots at least 5 cm thick growing from the stump part, the root part typically comprises approximately 50% of the dry matter of a pine stump and 70% of the dry matter of a spruce stump. Therefore, if stumps are to be used efficiently for the production of energy through combustion, it would be beneficial also to extract the usable root part in addition to the stump part proper. The prior art does not know any efficient and environmentally friendly solution for lifting a tree stump and the usable root part around it.

A stump typically contains a lot of water. If stumps are used as a source of energy through combustion, they are generally allowed to dry before use. It is a common practice to split the stump into smaller pieces to promote drying. Dried stumps are typically further cut up to reduce their volume for transport. The prior art currently in use requires, in addition to massive grubbing equipment, separate equipment for splitting or crushing stumps.

Known solutions for the extraction of stumps from the ground are presented, for example, in the patent publications US 262018, US 270351, US 3739823, US 3814152, US 4481989, SU 397172, SU 481266, SU 722517, SU 1166732, SU 1246943, FI 62614 and FI 761888. No known publication has presented a solution that would make it possible to extract stumps and the surrounding roots efficiently by means of an apparatus with relatively low lifting power, such as a modern forest tractor, designed to be highly agile in forest.

Various fungus diseases spread in forest via stumps and their roots. In Finnish forests, the worst cause of decay losses is the root rot fungus. It causes, for example, root rot in the spruce and therefore significant financial losses: proceeds from timber sales are reduced, the quality of the products made from the timber deteriorates and the cost of timber processing increases. The root rot also causes decay in healthy spruces and pines. It jeopardizes the next generation of trees, since it may survive for decades, for example in decaying stumps and roots. The root rot spreads to a tree stand between May and November by means of spores via, for example, freshly cut surfaces of stumps and damage to trees. The decay fungus is transmitted via the roots to healthy trees and in this way the damage spreads. From old stumps and their roots, root rot may also spread to seedlings and thus contaminate the next generation of trees. In southern Finland, as many as one in six trees mature for harvesting is rotten.

The spread of root rot to healthy forests is traditionally controlled, among others, by carrying out logging when the ground is snow-covered, when the fungus is at rest and forest machinery causes less damage to roots. Typically, when carrying out logging in summer time, the cut surfaces of stumps are biologically treated to prevent infection by the root rot fungus. The biological treatment of stumps involves infecting the stumps with another decay-causing fungus commonly occurring in forests, which causes only the stump to rot, but does not spread to cause decay in healthy trees. The biological treatment is time-consuming. It requires expensive equipment and chemical agents. The biological treatment is successful only in approximately 50% of all cases.

Present methods of grubbing stumps often leave a large amount of roots visible rendering them vulnerable to root rot infection. When a seedling is planted in such soil that is full of roots, there is a high risk of infection for the seedling from the roots.

### PURPOSE AND DESCRIPTION OF THE INVENTION

The purpose of the invention presented here is to alleviate or even eliminate the above-mentioned problems arising in the prior art.

The purpose of the invention presented here is particularly to create a stump grubber and a method that provides a more efficient and environmentally friendly way of extracting the stumps of cut trees from the ground as compared with the prior equipment and methods. Furthermore, a particular purpose is to create a novel way of preventing root rot or other fungus diseases threatening seedlings.

To accomplish the above mentioned purposes, among others, a grubber, its use in preventing root rot, a method for grubbing stumps and a method for preventing fungus disease, such as root rot, according to the invention are characterised by what is presented in the characterising parts of the independent claims presented below.

Embodiments and advantages mentioned in this text refer, in so far as they are applicable, to both a grubber, its use in preventing root rot, a method for grubbing stumps and a method for preventing fungus disease, such as root rot, according to the invention, even though this may not always be explicitly stated.

A typical grubber according to the invention is presented in claim 1. It comprises a frame that incorporates at least coupling means for coupling the grubber to a work machine, and gripping means supported on the frame for gripping a tree stump, and a blade arranged to cut downwards to sever roots around the stump. Typical gripping means according to the invention for gripping a stump comprise four or more spikes or blades arranged to penetrate into the stump. The coupling means may, for example, be similar to coupling means used in ordinary harvester heads, comprising, for example, conventional connections for hydraulic and electric systems. In such a case, a grubber according to the invention may be used as an attachment to an ordinary forest tractor or the like. The sharpness of the blade arranged to cut downwards may vary according to the needs at hand. In some types of terrain and for some stumps, the blade must be fairly sharp, but in some circumstances even a fairly dull blade serves the purpose of the invention well. An essential characteristic of the invention is the force directed mainly downwards by the blade, cutting soil and roots; the amount of force required depends on the situation. A typical grubber according to the invention furthermore comprises power means that are supported on the frame for moving the gripping means and cutting blade relative to each other in an at least substantially vertical direction. Thus, in the step of the method according to the invention where a stump is extracted from the ground, the cutting blade is arranged to be moved downwards relative to the gripping means and the gripping means are arranged to be moved upwards relative to the cutting blade. Preferably, either the cutting blade or the gripping means are arranged to be at least mainly immovable vertically relative to the frame. Thus, the cutting blade may, for example, be solidly attached by welding to the frame, and the gripping means is moved vertically relative to the frame and to the cutting blade by the power means. The power means typically comprise one or more hydraulic cylinders that receive their motive power, for example, from the work machine to which a grubber according to the invention is coupled. It is also possible to arrange the gripping means solidly to the frame, in which case the cutting blade is moved vertically relative to the frame and to the gripping means by the power means. It is also possible that the cutting blade and the gripping means are movable relative to the frame and to each other.

A typical method for grubbing stumps according to the invention is presented in claim 13, wherein a stump grubber coupled to the lifting means of a work machine is used, on the frame of which stump grubber gripping means and a cutting blade are supported. The method comprises at least the following steps:
- the stump grubber is positioned above a stump with the help of the work machine's lifting means,
- the stump is firmly gripped by the gripping means at no less than four points in the stump,
- the blade is positioned adjacent to the stump in an at least substantially vertical position,
- the cutting blade and the gripping means are moved relative to each other so that the cutting blade moves downwards relative to the gripping means and the gripping means moves upwards relative to the cutting blade, so that the stump is lifted upwards and roots growing from the stump are severed.

The greatest advantage brought by the invention is that, by using it, a stump can rapidly be lifted up from the ground independently, using only the hydraulic pressure supplied from a forest tractor or the like, without further outside power supply. By means of the invention, a stump may even be cut up at the same time to promote drying and transport. A stump extracted this way from the ground will be light in weight, and thus the lifting power of even a light forest tractor's boom is sufficient for lifting the stump to allow it to dry or to load it onto a transport truck. By means of the invention, a portion of the roots growing from the stump may also be extracted together with the stump.

Solutions according to the prior art propose various solutions for gripping a stump. Unexpectedly, however, it has recently been found that effective extraction of stumps requires gripping the stump at several points simultaneously. Many stumps are so weak that they disintegrate if lifted for example with one or two spikes only. Sometimes stumps are so hard that one or two spikes have to be thrust with great force into the stump in order to generate sufficient hold on the stump. In such a case, there is a risk that the stump splits even before it is extracted. Furthermore, with an insufficient number of spikes, it is usually impossible to split the stump into several pieces after extraction. Solutions according to the invention may have a required number of spikes or blades according to the invention, arranged to penetrate into the stump, for example 5, 6, 7, 8, 9, 10, 11, 12, 13, 14, 15, 16, 17, 18, 19 or 20. The number of spikes or blades may also be, 6-10, 6-20, 8-16, 8-20, 10-20.

In an embodiment of the invention, the cutting blade comprises a blade of at least essentially cylindrical form. The diameter of such a circular blade may be, for example, 1000-4000 mm, 1000-3000 mm, 1000-2000 mm, 1500-3500 mm, 1500-2500 mm, 1500-2000 mm. The diameter may be chosen so as to suit the application at hand. By selecting the size of the diameter of the blade, it is also possible to select the maximum size of stump that can be lifted with that blade. Furthermore, the diameter of the blade has an influence on how large part of the roots growing from the stump is extracted with the stump. A cylindrical blade according to the invention is typically large enough to allow the gripping means to operate inside the blade.

When extracting stumps according to the invention, roots coming up with the stump can be bent downwards. Thus, the stump can be lifted to stand on the bent roots so as to allow it to dry. Between the roots, under the stump, there remains empty air space, which further promotes drying. The roots can be bent particularly well by using a cylinder-formed cutting blade. Bending can furthermore be promoted by arranging a protrusion on the inside of the blade, extending a distance from the blade, with a flange welded onto the blade. Such a flange will bend roots extracted with a stump that is extracted with the apparatus according to the invention when the stump rises inside the blade. The flange may extend, for example, for 40-100 mm or 60-80 mm inwards from the inner surface of the blade.

A stump grubber according to the invention may be used according to the invention to mechanically prevent the spread of root rot. In a.method according to the invention, before a seedling is planted, in order to prevent fungus disease such as root rot, a stump and, for a distance around the stump, roots surrounding the stump are extracted from the ground. This is carried out so that an incision is made at least mainly around the stump and directed vertically downwards into the ground to a certain depth, and simultaneously, the stump is lifted at least mainly vertically upwards. Thanks to the incision surrounding the stump and directed vertically downwards, the roots of the extracted stump remaining in the ground are bent downwards and do not remain projecting randomly into the air. Thus, they are less prone to spread root rot and similar fungus diseases.

To prevent root rot and similar fungi, the soil must be removed from around a seedling to be planted preferably for a distance of approximately one metre from the planting site of the seedling. Thus, the seedling may grow and gain strength for a few years before its roots possibly make contact with old roots remaining in the ground. Roots remaining in the ground generally die and decay in a few years. In this case the root rot, for example, also dies. Naturally, the larger the area cleared of roots, the smaller is the risk of infection. A cleared area of one or two square metres is typically sufficient to efficiently protect spruce seedlings and the like.

A method for preventing fungus disease such as root rot prior to the planting of a seedling can be used as a part of a method for reforestation. In such a case, one or more seedlings are planted in place of a stump extracted according to a method for grubbing stumps according to the invention.

When extracting a stump from the ground, the greatest force for lifting the stump is usually required at the beginning of the work operation. A stump grubber in which the gripping means are arranged to be vertically immovable relative to the frame of the apparatus and the cutting blade is arranged to be movable, is easy to arrange in such a way that a hydraulic cylinder or cylinders moving the cutting blade and/or gripping means are shortest at the start of the lifting motion. It is known that the force generated by a hydraulic cylinder is typically while in its shortest position, i.e. when the piston rod is retracted.

In an embodiment of the invention, the gripping means comprises two gripping means, disposed on opposite sides of the apparatus and arranged to pivot around mainly parallel pivot axis. If both of these gripping means comprise three or more blades or spikes, six or more gripping points are obtained simply. If the said blades or spikes are arranged to be mainly immovable relative to one another, it is simple to control them. Naturally, each of the blades or spikes may also be independently movable by actuating means of their own.

According to the invention, the blades or spikes of one gripping means are arranged along a distance in the direction of their pivoting axis, i.e. along a gripping distance, which is no less than 400 mm and even more preferably no less than 600 mm or no less than 800 mm. Examples of possible ranges of variation for the gripping distance of a single gripping means, i.e. the longest distance between spikes are 400-1000 mm, 400-800 mm, 600-1500 mm and 600-1000 mm. Furthermore, the spikes or blades or the points of these on one gripping means are preferably arranged in a substantially straight line. Thus the gripping points of a gripping distance can be arranged along a fairly long and straight distance, so that the stump to be extracted does not have to be positioned at a specific point between the gripping means. This speeds up the operation of the apparatus considerably.

The distance for which the blades or spikes according to the invention penetrate into the stump varies according to the situation. Now, however, it has unexpectedly been found that generally, if the spikes or blades penetrate into the stump for 10-500 mm or 50-300 mm when lifting is started, an average stump will be lifted from the ground in accordance with the invention. Typical spikes or blades according to the invention are, for example, 20-50 mm, 20-30 mm or 30-50 mm in width. The size of the blades or spikes may be selected to suit the situation at hand. Now, however, it has unexpectedly been found that it is often important, in order to successfully extract stumps, that the total gripping area of the spikes or blades penetrating the stump at the start of the extraction operation, i.e. the upwards-facing area in contact with the stump, is of adequate size. A common gripping area of appropriate size may, for example, be 2000-50000 mm², 6000-25000 mm² or 10000-200000 mm². Sometimes it is also important that the relation of the gripping area to the diameter of the stump is appropriate. The gripping areas mentioned above by way of examples, are usually adequate for stumps of 100-800 mm in diameter. The distance between the blades or spikes may also be of significance for the success of extraction. The typical distance between adjacent blades or spikes may, for example, be 3, 5, 7 or 10 times the width of a spike. All measures given here serve merely as examples.

In addition to those mentioned above, also other embodiments of the invention and their advantages are presented in the appended figures and non-independent claims.

### BRIEF DESCRIPTION OF THE FIGURES

In the following, the invention is described in more detail by referring to the accompanying schematic drawing, in which
Figure 1 represents a first stump grubber according to an example, which is not part of the invention viewed from the side and partly transparent when being lowered onto a stump to be extracted,
Figure 2 represents the stump grubber of Fig. 1 when it has gripped the stump,
Figure 3 represents the stump grubber of Fig. 1 when the stump has been severed from its root system,
Figure 4 represents the stump grubber of Fig. 1 when it and the stump are being lifted from the ground,
Figure 5 represents a stump grubber according to the invention viewed from above and partly transparent,
Figure 6 represents the stump grubber of Fig. 5 viewed from the side,
Figure 7 represents a gripping means according to the invention viewed from the side,
Figure 8 represents the gripping means of Fig. 7 viewed from the front,
Figure 9 represents the gripping means of Fig. 7 viewed from above,
Figure 10 represents a joint according to the invention viewed from the side and in part as a sectional view taken along line A-A of Fig. 11,
Figure 11 represents the joint of Fig. 10 viewed from above and partly as a sectional view,
Figure 12 represents the stump grubber of Fig. 5 when being lowered onto a stump,
Figure 13 represents the stump grubber of Fig. 5 when it has gripped the stump, and
Figure 14 represents the stump grubber of Fig. 5 when the stump has been severed from its root system and the stump is being lifted from the ground.

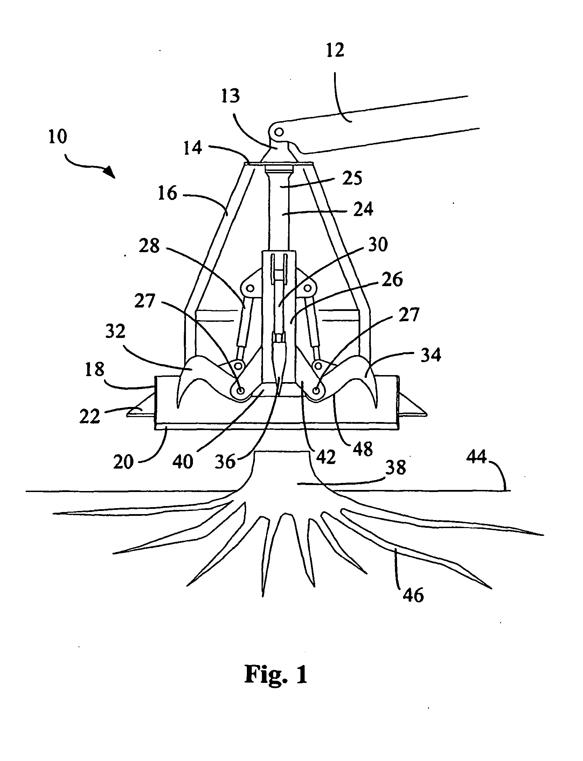

A stump grubber 10 shown by way of example, which is not part of the invention, in Figures 1-4 comprises a frame 14 coupled with coupling means 13 to the boom 12 of a work machine, such as a forest tractor, and a cylindrical blade 18 immovable attached thereto by means of support arms 16. The blade 18 is made of a strong material, such as stainless or hardened steel, and it is sharpened at its lower edge 20. The sharpness of the blade 18 may vary, and an apparatus may function, even with a totally dull-edged cylinder 18, depending on the terrain and type of the stump to be extracted. A horizontally positioned flange 22 is welded onto the outer wall surface of the cylinder 18. A vertical main hydraulic cylinder 24 is attached to the centre of the frame. It is stably and immovably attached the top portion of the frame 14 by its piston rod, i.e. by its first end 25. Gripping means, i.e. four hooks, supported by hinges 27 and by hydraulic cylinders 28, 30, are attached on the other end 26 of the main hydraulic cylinder, three of which hooks, 32, 34, 36, can be seen in the Figures. The hooks 32 and 34 disposed opposite each other are structurally similar. They are arranged so as to be pivoted by cylinders 28 around hinges 27, within the limits of travel specified for them. The hook 36 is similar to the hook opposite to it, which is not visible in the Figure. There are altogether no less than two hooks. No details obvious to a person skilled in the art and irrelevant to the basic idea of the invention are presented in the Figures, such as hydraulic fluid connections from the boom 12 of the work machine to the hydraulic cylinders. There may be more than one main cylinder; for example, there may be four cylinders on different sides of the midpoint of the apparatus. The main cylinder or main cylinders may also be arranged on the apparatus in the opposite direction to that shown in the Figures, i.e. with the piston rod downwards. In such a case, the other structures of the apparatus are changed accordingly.

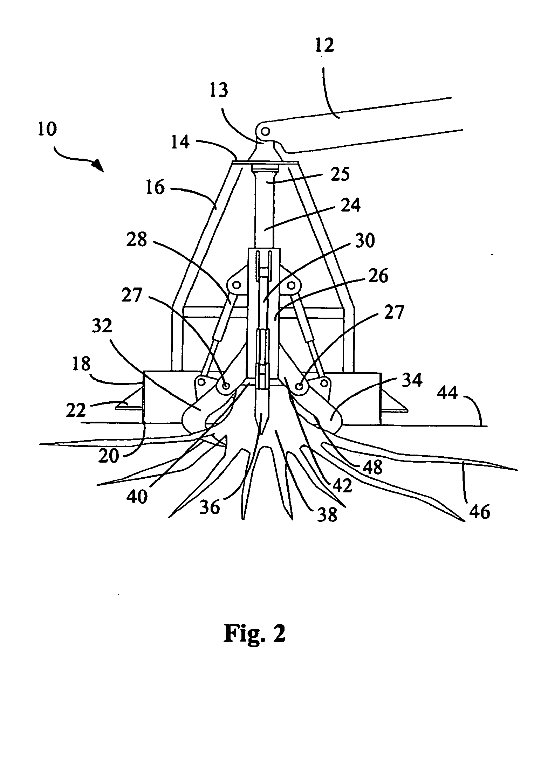

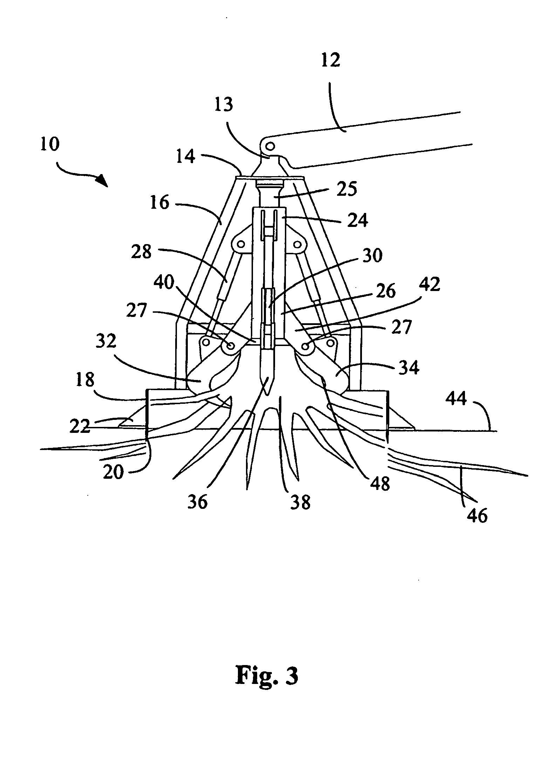

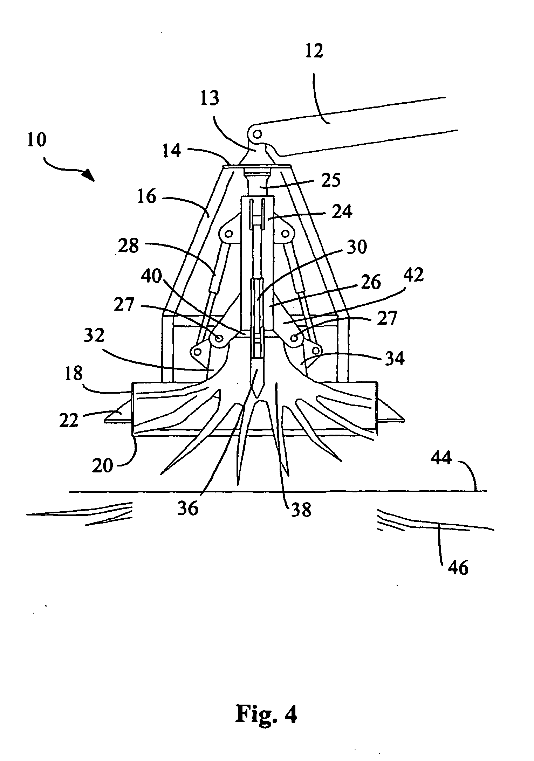

The apparatus shown in the Figures functions as follows. The stump grubber 10 is lowered by means of a lifting boom 12 onto a stump 38 to be extracted with the hooks in the so-called open position shown in Fig. 1. The piston rod 25 of the main cylinder 24 is at least partially inside the cylinder. At the lower end of the main cylinder, there is a guide cone 40, which guides the apparatus to the middle of the stump 38, into an ideal position for lifting. The guide cone 40 may also, at least partially, be formed from the attachment structures 42 of the hooks 32, 34, 36. The apparatus may also be implemented without a special guide cone or the like. The cylindrical blade positioned around the hooks and the main cylinder are simultaneously lowered around the stump 38, against the ground 44, onto the roots 46 growing from the stump. The contact of the guide cone 40 with the stump 38 and the contact of the cylindrical blade 18 with the ground 44 may, if so wished, be controlled to take place simultaneously by regulating the length of the main cylinder 24. After this, the hooks 32-36 are pressed against the stump 38 by means of the cylinders 28 and 30, to the so-called closed position shown in Fig. 2. The hooks are pressed underneath the butt portion of the stump or into the side of the stump to an appropriate depth so that extraction may be started. For this purpose, approximately 50% of the hooks' maximum travel distance, for example, is used, depending on the type of the stump and its roots. Lifting the stump 38 from the ground is now carried out by retracting the main cylinder 24. The hooks 32-36 then start to lift the stump 38 upwards within the limits of the maximum stroke of the main cylinder 24. Simultaneously, a counter force exerted on the frame 14 by the main cylinder 24 pushes the lower edge 20 of the cylindrical blade towards the ground and the roots 46 therein, which results in the roots being severed. The flange 22 prevents the cylindrical blade 18 from being pushed too far into the ground. The stump 38 is extracted from the ground entirely without the lifting power of the work machine's boom 12. The stump 38 extracted from the ground is shown in Fig. 3. After this, the stump may be lifted to the desired location by means of the boom 12 of the work machine. The hooks 32-36 supporting the stump may now be pressed into an entirely closed position, as shown in Fig. 4. The hooks 32-36 have cutting and slitting inner surfaces 48, which split the stump 38 into pieces. This allows the stump to dry quicker. This is preferable, for example, if the stumps are to be combusted. The stump is removed from the apparatus by opening the hooks and thrusting the piston rod of the main cylinder 24 out of the cylinder. Only some of the hooks in the apparatus may be arranged to cut or split the stump, or they may all be arranged in this way. The stump may also be split by hooks that do not have specifically sharpened inner surfaces. The apparatus may also have separate means for splitting stumps.

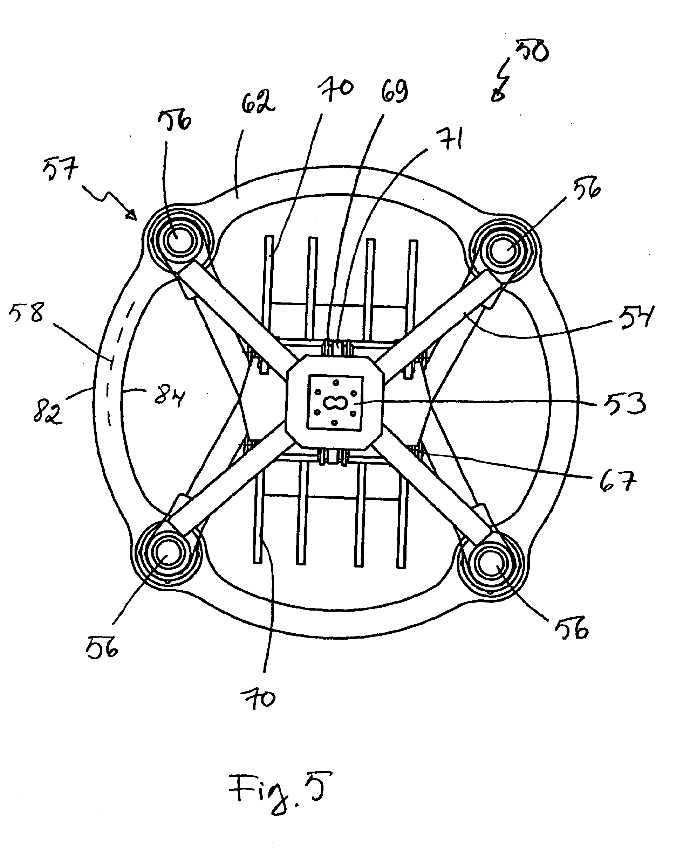

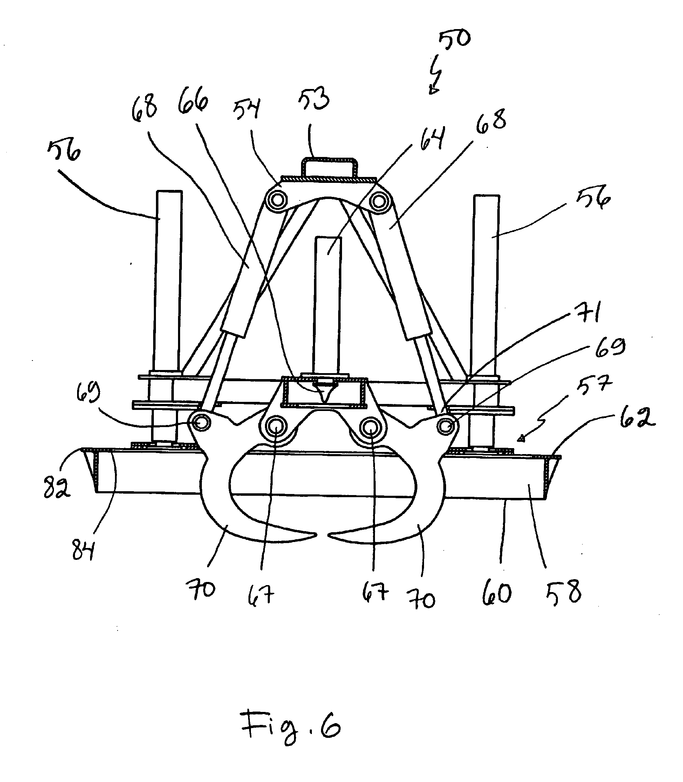

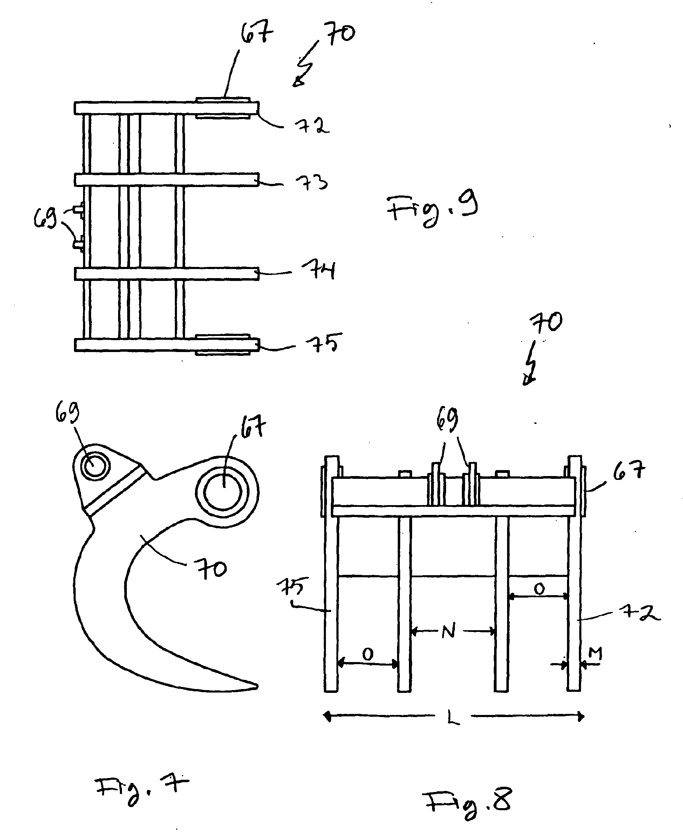

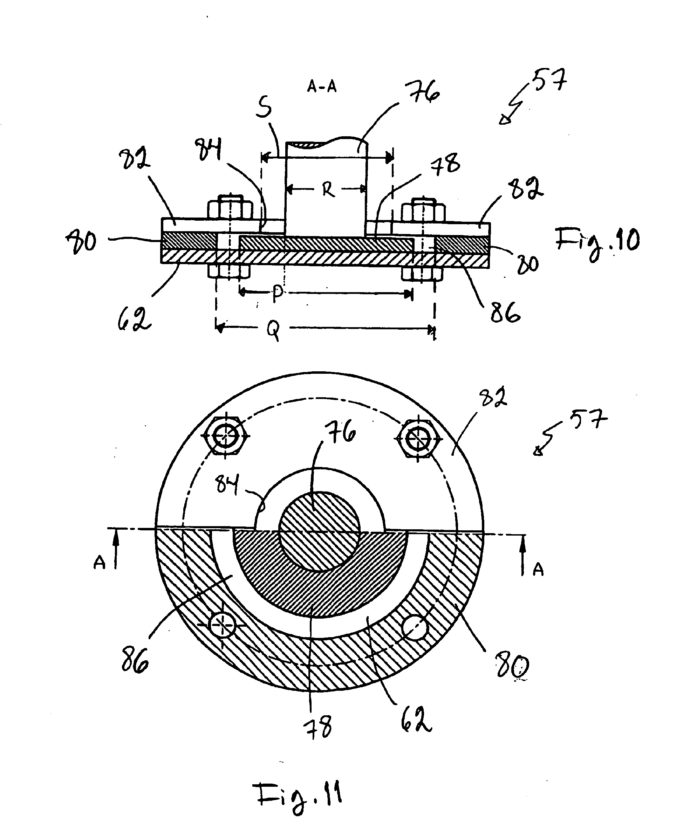

Figures 5-14 represent a stump grubber 50 according to the invention by way of an example. The main difference compared with the stump grubber 10 in Figures 1-4 is that now the cutting blade is arranged to be movable relative to the frame and the gripping means are arranged to be immovable relative to the frame. The stump grubber 50 comprises a frame 54 coupled by coupling means 53 to the boom 52 of a work machine, such as a forest tractor. A cylindrical blade 58 is attached to the frame by means of hydraulic cylinders 56, to be movable in a mainly vertical direction relative to the frame. The diameter of the blade 58 is approximately 2000 mm. A blade of this size is highly applicable for extracting stumps and roots of the tree species common in Finland. Hydraulic cylinders 56 are attached to the blade by a joint 57, which is represented in greater detail in Figures 10 and 11. The blade 58 is made of a strong material, such as stainless or hardened steel, and it is sharpened at its lower edge 60. A horizontally positioned flange 62 is welded onto the cylindrical blade 58, the flange projecting both inside and outside the blade 58. A vertical hydraulic cylinder 64 is attached to the middle of the frame and the cylindrical blade. The cylinder is arranged to move a splitting blade 66. The splitting blade 66 may be shaped as appropriate for each situation. The Figures show a blade that grows in diameter exponentially from the sharp end of the blade. A shape like this has yielded good results when used with the apparatus.

Two gripping means 70, supported by hinges 67 and hydraulic cylinders 68, are attached to the frame 54. The gripping means 70 are arranged to pivot around their hinges 67 within the limits of travel specified for them. The gripping means 70 is attached by an ear 69 to the end 71 of the piston rod of the hydraulic cylinder 68 in such a way as to pivot. Both gripping means 70 comprise four hooks 72-75. The hooks 72-75 are arranged to be immovably relative to each other. The gripping means 70 disposed opposite to each other are structurally similar. One gripping means generally includes no less than three hooks. The gripping means 70 has a gripping width L of 630 mm. The hooks have a width M of 30 mm. The distance N between the central hooks is 210 mm, and the distance O between the side hooks and central hooks is 150 mm. The measures may naturally be changed in accordance with the situation at hand. It has been found, however, that a gripping means 70 with the dimensions given here is very efficient and functional for the extraction of both pine and spruce stumps in Finnish forests.

The Figures 10 and 11 represent a joint 57 between the end of the piston rod 76 of the hydraulic cylinder 56 and a flange 62 welded onto the cylindrical blade 58, allowing the piston rod 76 to move relative to the flange 62. To the end of the piston rod 76 is welded a circular disc 78, the diameter P of which is by a distance greater than the diameter R of the piston rod. The disc 78 is not attached to the flange 62 in any particular way, but rather these two are able move relative to each other. A ring 80 is attached to the flange 62, around the disc 78. The inner diameter Q of the ring 80 is by a distance greater than the diameter of the disc 78. A ring-shaped cover 82 is attached on top of the ring 80, in middle of which cover 82 an opening 84 has been made through which the piston rod 76 is arranged to run. The diameter S of the opening 84 is greater than R, but smaller than P. In other words, in the examples shown in the Figures, Q > P > S > R. Thus, a space 86 delimited by the steel flange 62, ring 80 and cover 82 is formed in the joint 57, within which space the end 76 of the piston rod of the hydraulic cylinder 56 and the disc 78 attached to it are able to move. The joint 57 adapts to any strain exerted on the joints between the flange 62 and hydraulic cylinders 56 when the stump grubber 50 is operated. In the space 86 delimited by the flange 62, the ring 80 and the cover 82, a retraction member may be positioned that automatically seeks to retract the disc 78 and thus also the piston rod 76 that have moved in the said space 86 back to their rest position. This retraction member may, for example, be a rubber ring positioned between the disc 78 and the ring 80. The said space 86 may also be entirely filled with a resilient substance, such as an appropriate rubber mixture. It is also possible to make the said space 86 entirely sealed, and to fill it with hydraulic oil, for example, or with some other suitable substance. The joint type 57 represented in Figures 10 and 11 is also suitable for attaching hydraulic cylinders in other situations than those described in this application. Thanks to the joint type 57, a joint between a hydraulic cylinder and some other component withstands bending forces exerted on it better than an immovable joint. Examples of applications suitable for this type of joint are the joints of hydraulic cylinders of actuators in the harvester heads of forest machinery.

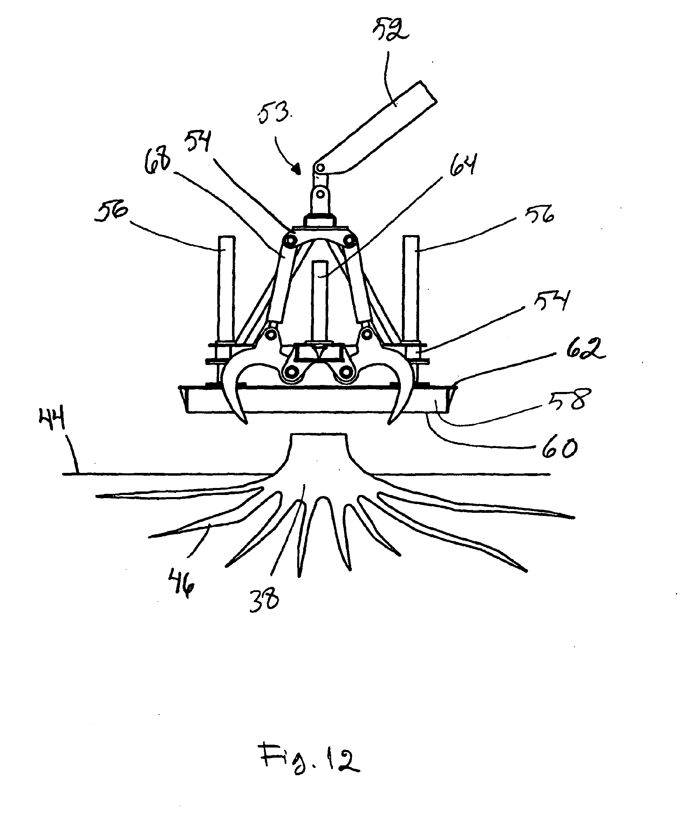

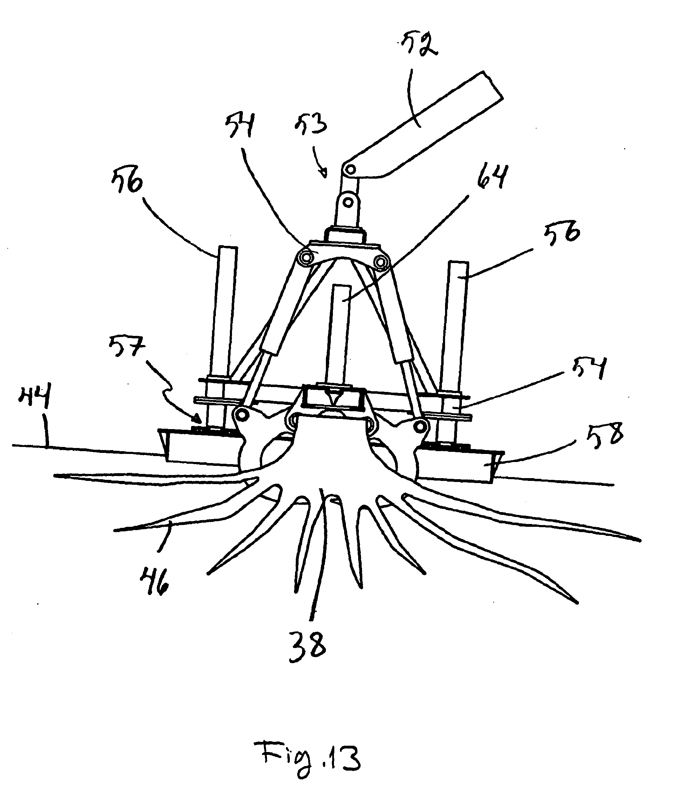

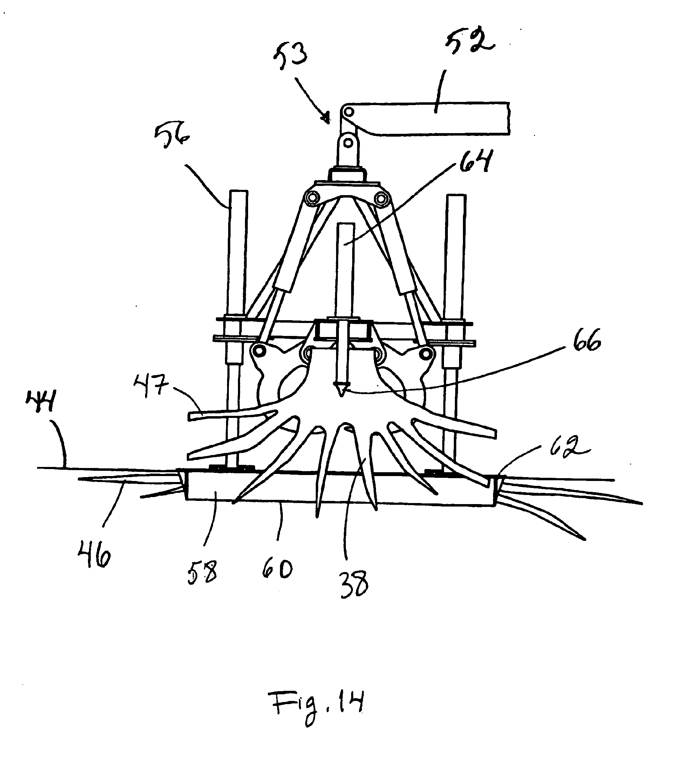

Figures 12-14 represent function of the apparatus 50. The stump grubber 50 is lowered by means of a lifting boom 52 onto a stump 38 to be extracted with the gripping means 70 in the so-called open position shown in Fig. 12. In the open position, the hydraulic cylinders 68 moving the gripping means 70 are in their shortest position. The piston rods 76 of the cylinders 56 that move the blade 58 are also retracted in their cylinders. The operator of the apparatus steers the stump grubber 50 with the boom 52 to a suitable position in relation to the stump 38. The stump 38 does not have to be in middle of the apparatus 50 or its cylindrical blade 58; it is sufficient that the stump is positioned between the gripping means 70. The stump grubber and its cylindrical blade 58 are now lowered around the stump 38 against the ground 44, onto the roots 46 growing from the stump. After this, the hooks of the gripping means 70 are pressed by means of the cylinders 68 against the stump 38 and into and/or under the stump, to the so-called closed position shown in Fig. 13. The hooks are pressed underneath the butt portion of the stump or into the side of the stump to an appropriate depth so that extraction may be started. For this, for example, approximately 50% of the maximum travel distance of gripping means 70 is used, depending on the type of the stump and its roots. Lifting the stump 38 up from the ground is now carried out by extending the cylinders 56. This causes the lower edge 60 of cylindrical blade to be pressed towards the ground and the roots 46 therein, which results in the roots being severed off. Simultaneously, a counter force exerted on the frame 54 by the cylinders 56 begins to lift the gripping means 70 and the stump 38 upwards within the limits set by the stroke of the cylinders 56. The flange 62 prevents the cylindrical blade 58 from being pressed too far into the ground 44. The stump 38 is extracted from the ground entirely without the lifting power of the boom 52 of the work machine. The stump 38 extracted from the ground is shown in Fig. 14. After this, the stump may be lifted to a desired location by means of the boom 52 of the work machine. Now, the hydraulic cylinder 64 can be extended in the manner shown in Fig. 14 so that a splitting blade 66 attached to it is pressed into the stump 38 from above and splits the stump. This allows the stump to dry quicker. The stump is removed from the apparatus by opening the gripping means 70 and retracting the piston rods of the cylinders 56.

The hooks 32-36 and 72-75 may also be fixed into the stump 38 so that they are positioned at least mainly under the stump. In this way, it is possible to lift efficiently for example stumps that easily break up completely if hooks are pressed into the stump from the side.

A vibratory attachment or vibra may also be coupled to the apparatus, the purpose of which attachment is to shake off any soil and stone clinging to the roots. Some of the stone material may also be removed by means of coarse serration arranged on the blades; which shakes the stump when the blades are moved. Thanks to the cutting and slitting blades on the inside surfaces of the hooks, the force required to split the stump is lower. Furthermore, cone-shaped wedges may be attached to the inside surfaces, which together with the blades ensure that the stump is properly cut up. If hooks disposed opposite to each other are positioned asymmetrically underneath the stump, they will, through the characteristics mentioned above, even better loosen any soil and rock clinging to the stump and break up the root system under the stump.

The flange 22, 62 is typically positioned at a distance of 5-30 cm, preferably 10-15 cm on a horizontal plane from the lower edge 20, 60 of the blade cylinder. The width of the flange is typically 10-30 cm, preferably approximately 20 cm. It prevents the blade from being pressed under the broken roots, which increases the lifting power of the apparatus and at the same time prevents the root system remaining outside the blade from being lifted up from the ground, which in turn promotes decomposition of the part of the root system remaining in the ground and elimination of any root rot. The location of the cylindrical blade 58 under the horizontal flange 62 is marked by a broken line in Fig. 5. The outside edge 82 and the inside edge 84 of the flange 62 are at approximately the same distance from the blade 58. When the stump 38 is lifted with the apparatus 50, the flange portion 84 on the inside of the blade functions as described above and prevents the apparatus from being pressed too deep into the ground. Furthermore, the inside part of the flange 62 prevents the severed roots 47 from rising up directly in the direction of lift. The flange edge 84 forces the roots 47 to turn to some degree towards the lower part of the butt of the stump 38 that is to be extracted. In this way, the roots 47 are extracted along with the stump and function in a way as legs for the butt part of the stump. When the stump 38 is released from the apparatus 50, the stump generally remains standing on the roots 47. Empty spaces for air remain between the bent roots, which promotes drying of the stump 38. Furthermore, the ends of the roots 47 will strike against the inside edge 84 of the flange as they are severed, whereby soil clinging to the roots 47 is loosened from them.

Between the frame 14, 54 of the apparatus and the boom 12, 52 of the work machine a rotator according to the prior art may be coupled, which rotator allows the apparatus 10, 50 to be rotated on the spot. With a rotator, it is easier to position the apparatus as required on the stump. Furthermore, soil and stone clinging to the stump may be loosened by rotating the apparatus and the stump with the rotator after the extraction of the stump. This rotation movement may also be used to level the pit remaining in the place of the extracted stump.

The trajectory of the hooks 32-36 and gripping means 70 may be limited by technical means in such a way that they cannot be pressed so as to touch the blade parts of the hooks placed crosswise in relation to each other, but rather stop at the level of the outside surface of the hooks. In this way, the tip parts of all the hooks may asymmetrically grip the root part of the stump to be extracted at different heights. The benefit of this is that the stump is more likely to remain intact at the beginning of the extraction.

The stump 38 may be supported by its upper end during the extraction. Supporting the upper end makes it more likely that the stump will remain intact during the extraction. The stump may be supported, for example, by inclined fixing flanges under the support pipe/frame of the hooks 32-36 and by the cone 40 between the flanges, against which cone the upper end of the stump 38 may be pressed when the hooks 32-36 are pressed into the stump. In this way, it can be ensured that the root part of the stump breaks before the upper portion of the stump does. The upper portion of the stump may then be split only at the final stage of extraction, when the hooks are pressed into the fully closed position. It is possible to arrange blades on the lower surface of the cone 40 or on the frame 14, 54 of the apparatus, against which the stump 38 is pressed when extracted. The blades may, for example, be arranged in a cross shape so that the upper part of the stump 38 is split into four pieces. It is possible to implement the individual grip of the hooks 32-36 and 72-75 on the stump 38 to be extracted by connecting the hydraulic cylinders 28, 30 and 68 moving the hooks 32-36 and the gripping means 70 in series. This enables, for example, the following benefits to be achieved:
- the hooks may be controlled by one double-action control valve,
- each hook will grip the stump with the same pressing power regardless of where in the stump the hooks are positioned during the extraction phase. At the same time, the apparatus is automatically guided to the best lifting position.

Typical benefits, dimensions and other data of the invention and its embodiments:
- It is possible to make the apparatus light in weight, with an operating weight of less than 1000 kg.
- The reach of the apparatus may easily be 10-15 m, depending on the reach of the boom of the machine moving the apparatus.
- It is possible to use the same driving tracks in the terrain as other forest machinery.
- The apparatus can be coupled to all harvesters in place of a felling head. Likewise, it can be coupled to a tractor equipped with a loader, in place of a bucket.
- The structure of the apparatus is simple and the price competitive.
- Already at the extraction phase the apparatus chops and cleans up the stumps for drying and end-use, such as combustion.
- The apparatus is very suitable for mechanical prevention of root rot, particularly in spruce-dominated logging areas.
- When mechanical prevention of root rot is compared with the chemical or biological methods, there are considerable benefits favouring the mechanical method. The mechanical method makes it possible to obtain a substantial portion of the stump without any of the costs associated with chemical prevention. The energy content of the stump usually remains totally unutilised when using the chemical method.

The Figures 5 to 14 show only a particularly advantageous example of embodiment in accordance with the invention. For a person skilled in the art it is obvious that the invention is not restricted to the embodiment presented above, but the invention may be modified within the scope of protection of the independent claims presented below. For example, the gripping means 70 of the example of embodiment in accordance with the invention may be used in place of the hooks in the apparatus 10 of the first example. Some possible embodiments of the invention are presented in the dependent claims, and they should not as such be regarded as restricting the scope of protection of this invention.

## Claims

1. A stump grubber (50) comprising a frame (54) incorporating coupling means (53) to couple the stump grubber to a work machine (52), and, supported on the frame,
- gripping means (70) to grip a stump (38),
- a cutting blade (58) arranged to cut downwards to sever roots (46) around the stump (38),
- power means (56) to move the gripping means (70) and the cutting blade (58) relative to each other in at least a substantially vertical direction so that the cutting blade (58) is arranged to be downwardly movable relative to the gripping means (70), and the gripping means (70) are arranged to be upwardly movable relative to the cutting blade (56) in order to lift the stump (38) from the ground (44),
wherein
the gripping means (70) for gripping the stump (38) comprise
- two gripping means (70) arranged on opposite sides of the apparatus (50) to pivot around mainly parallel pivot axes (67),
**characterised in that**
- the gripping means (70) comprise from 5 to 20 spikes or blades (72-75) arranged to penetrate into and/or under the stump (38), whereby the blades or spikes of one gripping means are arranged along a distance in the direction of its pivoting axis, which distance is no less than 400 mm, and that a flange (62) is welded onto the cutting blade (58).

2. A stump grubber according to claim 1, **characterised in that** the cutting blade is arranged to be at least mainly immovable- vertically relative to the frame.

3. A stump grubber according to claim 1, **characterised in that** the gripping means (70) are arranged to be at least mainly immovable vertically relative to the frame (54).

4. A stump grubber according to claim 1, **characterised in that** the cutting blade (58) comprises a blade that is at least mainly cylindrical in form.

5. A stump grubber according to claim 1, **characterised in that** the power means (56) are attached to the frame (54) and/or
- the gripping means (70) or
- the cutting blade (58)
by means of a joint (57) that allows the power means to move relative to the frame (54), the gripping means (70) or the cutting blade (58) in a direction other than the direction of the force generated by the power means.

6. A stump grubber according to claim 1, **characterised in that** it furthermore comprises pivoting means (67, 68, 69) to pivot the gripping means (70) relative to the frame (54) between at least two positions, namely an open position, where the gripping means (70) are intended to be out of contact with the stump (38), and a closed position, where the gripping means (70) are intended to be in contact with the stump (38) and to have a grip on the stump (38).

7. A stump grubber according to claim 6, **characterised in that** the pivoting means include hinge members (67, 69) and power members (68) to pivot the gripping means (70) relative to the frame (54).

8. A stump grubber according to claim 1, **characterised in that** the spikes or blades (72-75) are formed in such a way as to slit the stump (38) and, thus to split the stump (38).

9. A stump grubber according to claim 1, **characterised in that** the spikes or blades are coarsely serrated on their cutting sides.

10. A stump grubber according to claim 1, **characterised in that** two blades (72-75) are arranged at least almost on opposite sides of the apparatus (50) to pivot around parallel pivot axes (67)
- asymmetrically so that the said blades are arranged to pass each other in the closed position, or
- symmetrically so that the said blades are arranged to be aligned in the closed position.

11. A stump grubber according to claim 1, **characterised in that** the two gripping means both comprise no less than three blades or spikes (72-75) arranged to be mainly immovable relative to one an other.

12. A stump grubber according to claim 11, **characterised in that** the blades or spikes (72-75) of one gripping means (70) are arranged along a distance, measured in the direction of their pivot axis (67), of no less than 600 mm or no less than 800 mm.

13. A method for grubbing stumps (38) with a stump grubber (50) coupled to the lifting means (52) of a work machine, with gripping means (70) and a cutting blade (58) supported on the frame (54) of the stump grubber, and in which method
- the stump grubber (50) is positioned above the stump (38) with the help of the lifting means (52) of the work machine,
- the stump (38) is firmly gripped by the gripping means (70) at the side of the stump (38), at no less than two points on the stump (38),
- the cutting blade (58) is positioned beside the stump (38) in an at least substantially vertical position,
- the stump (38) is lifted upwards and roots growing out of the stump are severed by moving the cutting blade (58) and gripping means (70) relative to each other so that the cutting blade (58) is moved downwards relative to the gripping means (70) and the gripping means (70) are moved upwards relative to the cutting blade (58),
- two gripping means (70) on opposite sides of the apparatus (50) are pivoted around mainly parallel pivot axes (67),
**characterised in that**
- the stump (38) is firmly gripped by the gripping means (70) at the side of and/or under the stump (38) by forcing spikes or blades (72-75) into and/or under the stump at 5 to 20 points, and
- a flange (62) welded onto the cutting blade (58) prevents the cylindrical blade (58) from being pressed too far into the ground (44).

14. A method according to claim 13, **characterised in that** in this method, the cutting blade is kept at least mainly immovable in the vertical direction relative to the frame.

15. A method according to claim 13, **characterised in that** in this method, the gripping means (70) are kept at least mainly immovable in the vertical direction relative to the frame (54).

16. A method according to claim 13, **characterised in that** in this method, the stump (38) is supported against the stump grubber, also from above.

17. A method according to claim 13, **characterised in that** the gripping means incorporate cutting blades (48), and that in this method, the gripping means (72-75) are pressed so deep into the stump (38) at its side that the stump (38) is at least partially split.

18. A method according to claim 13, **characterised in that** the release of the stump (38) and the severing of the roots (46) is carried out using only the stump grubber's own power means (56).

19. The use of a stump grubber (50) according to claim 1 for preventing the spread of root rot.

## Patentansprüche

1. Stockrodegerät (50), umfassend ein Gestell (54), das ein Kupplungsmittel (53) eingebaut hat, um das Stockrodegerät an eine Arbeitsmaschine (52) zu kuppeln, und an dem Gestell getragen
- Greifmittel (70), um einen Stock (bzw. Stumpf) (38) zu greifen,
- ein Schneidmesser (58), das angeordnet ist, um nach unten zu schneiden, um Wurzeln (46) um den Stock (38) abzutrennen,
- Antriebsmittel (56), um die Greifmittel (70) und das Schneidemesser (58) relativ zueinander in wenigstens einer im Wesentlichen vertikalen Richtung zu bewegen, so dass das Schneidemesser (58) so angeordnet ist, dass es relativ zu den Greifmitteln (70) nach unten bewegbar ist, und wobei die Greifmittel (70) so angeordnet sind, dass sie relativ zum Schneidemesser (56) nach oben bewegbar sind, um den Stock (38) aus dem Boden (44) zu heben,
wobei die Greifmittel (70) zum Greifen des Stocks (38) umfassen:
- zwei Greifmittel (70), die an gegenüberliegenden Seiten des Geräts (50) angeordnet sind, um sich um vorwiegend parallele Drehachsen (67) zu drehen,
**dadurch gekennzeichnet , dass**
- die Greifmittel (70) 5 bis 20 Spikes oder Klingen (72-75) umfassen, die angeordnet sind, um in und/oder unter den Stock (38) einzudringen, wobei die Klingen oder Spikes eines Greifmittels entlang eines Abschnittes in Richtung seiner Drehachse angeordnet sind, wobei dieser Abschnitt nicht kleiner als 400 mm ist, und dass ein Flansch (62) an das Schneidemesser (58) geschweißt ist.

2. Stockrodegerät gemäß Anspruch 1, **dadurch gekennzeichnet, dass** das Schneidemesser so angeordnet ist, dass es wenigstens im Wesentlichen vertikal zum Gestell unbeweglich ist.

3. Stockrodegerät gemäß Anspruch 1, **dadurch gekennzeichnet, dass** die Greifmittel (70) so angeordnet sind, dass sie wenigstens im Wesentlichen vertikal zum Gestell (54) unbeweglich sind.

4. Stockrodegerät gemäß Anspruch 1, **dadurch gekennzeichnet, dass** das Schneidemesser (58) eine Klinge umfasst, die wenigstens im Wesentlichen zylindrisch in der Form ist.

5. Stockrodegerät gemäß Anspruch 1, **dadurch gekennzeichnet, dass** die Antriebsmittel (56) an dem Gestell (54) und/oder
- den Greifmitteln (70) oder
- dem Schneidemesser (58)
mittels einer Verbindung (57) befestigt sind, die dem Antriebsmittel erlaubt, die Greifmittel (70) oder das Schneidemesser (58) bezüglich des Gestells (54) in einer anderen Richtung als die Richtung der Kraft, die durch das Antriebsmittel erzeugt wird, zu bewegen.

6. Stockrodegerät gemäß Anspruch 1, **dadurch gekennzeichnet, dass** es außerdem Drehmittel (67, 68, 69) umfasst, um die Greifmittel (70) relativ zum Gestell (54) zwischen wenigstens zwei Positionen, nämlich einer offenen Position, in der die Greifmittel (70) nicht in Kontakt mit dem Stock (38) sein sollen, und einer geschlossenen Position, in der die Greifmittel (70) mit dem Stock (38) in Kontakt sein sollen und den Stock (38) im Griff haben sollen, zu drehen.

7. Stockrodegerät gemäß Anspruch 6, **dadurch gekennzeichnet, dass** die Drehmittel Gelenkelemente (67, 69) und Antriebselemente (68) umfassen, um die Greifmittel (70) relativ zum Gestell (54) zu drehen.

8. Stockrodegerät gemäß Anspruch 1, **dadurch gekennzeichnet, dass** die Spikes oder Klingen (72-75) derart ausgebildet sind, sie den Stock (38) schlitzen und so den Stock (38) spalten.

9. Stockrodegerät gemäß Anspruch 1, **dadurch gekennzeichnet, dass** die Spikes oder Klingen an ihrer Schneideseite grob gezahnt sind.

10. Stockrodegerät gemäß Anspruch 1, **dadurch gekennzeichnet, dass** zwei Klingen (72-75) wenigstens fast an gegenüberliegenden Seiten des Geräts (50) angeordnet sind, um sich um parallele Drehachsen (67)
- asymmetrisch zu drehen, so dass die Klingen so angeordnet sind, dass sie in der geschlossenen Position einander passieren, oder
- sich symmetrisch drehen, so dass die Klingen in der geschlossenen Position so angeordnet sind, dass sie ausgerichtet sind.

11. Stockrodegerät gemäß Anspruch 1, **dadurch gekennzeichnet, dass** die zwei Greifmittel beide nicht weniger als drei Klingen oder Spikes (72-75) umfassen, die so angeordnet sind, dass sie relativ zueinander im Wesentlichen unbeweglich sind.

12. Stockrodegerät gemäß Anspruch 11, **dadurch gekennzeichnet, dass** die Klingen oder Spikes (72-75) eines Greifmittels (70) entlang eines Abschnitts, gemessen in Richtung ihrer Drehachse (67), von nicht kleiner als 600 mm oder nicht kleiner als 800 mm angeordnet sind.

13. Verfahren zum Roden von Stöcken (bzw. Stümpfen) (38) mit einem Stockrodegerät (50), das an Hebemittel (52) einer Arbeitsmaschine gekuppelt ist, mit Greifmitteln (70) und einem Schneidemesser (58), getragen an dem Gestell (54) des Stockrodegeräts, wobei in dem Verfahren
- das Stockrodegerät (50) über dem Stock (38) mit Hilfe des Hebemittels (52) der Arbeitsmaschine positioniert wird,
- der Stock (38) durch die Greifmittel (70) an der Seite des Stocks (38) an nicht weniger als zwei Punkten an dem Stock (38) gegriffen wird,
- das Schneidemesser (58) neben dem Stock (38) in wenigstens im Wesentlichen vertikaler Richtung positioniert wird,
- der Stock (38) nach oben gehoben wird und Wurzeln, die aus dem Stock wachsen, durch Bewegen des Schneidemessers (58) und der Greifmittel (70) relativ zueinander, so dass das Schneidemesser (58) relativ zu den Greifmitteln (70) nach unten bewegt wird und die Greifmittel (70) relativ zum Schneidemesser (58) nach oben bewegt werden, abgetrennt werden,
- zwei Greifmittel (70) an gegenüberliegenden Seiten des Geräts (50) um im Wesentlichen parallele Drehachsen (67) gedreht werden,
**dadurch gekennzeichnet, dass**
- der Stock (38) durch die Greifmittel (70) an der Seite des Stocks und/oder unter dem Stock (38) fest gegriffen wird, indem Spikes oder Klingen (72-75) in und/oder unter den Stock an 5 bis 20 Punkten getrieben werden, und
- ein Flansch (62), der an das Schneidemesser (58) geschweißt ist, verhindert, dass die zylindrische Klinge (58) zu weit in den Boden (44) getrieben wird.

14. Verfahren gemäß Anspruch 13, **dadurch gekennzeichnet, dass** in diesem Verfahren das Schneidemesser wenigstens im Wesentlichen in vertikaler Richtung relativ zum Gestell unbeweglich gehalten wird.

15. Verfahren gemäß Anspruch 13, **dadurch gekennzeichnet, dass** in diesem Verfahren die Greifmittel (70) wenigstens im Wesentlichen in der vertikalen Richtung relativ zum Gestell (54) unbeweglich gehalten werden.

16. Verfahren gemäß Anspruch 13, **dadurch gekennzeichnet, dass** in diesem Verfahren der Stock (38) auch von oben gegen das Stockrodegerät gehalten wird.

17. Verfahren gemäß Anspruch 13, **dadurch gekennzeichnet, dass** die Greifmittel Schneidemesser (48) umfassen und dass in diesem Verfahren die Greifmittel (72-75) so tief in den Stock (38) an seiner Seite getrieben werden, dass der Stock (38) wenigstens teilweise gespalten wird.

18. Verfahren gemäß Anspruch 13, **dadurch gekennzeichnet, dass** die Freilegung des Stocks (38) und die Abtrennung der Wurzeln (46) durchgeführt wird, indem nur das eigene Antriebsmittel (56) des Stockrodegeräts verwendet wird.

19. Verwendung eines Stockrodegeräts (50) gemäß Anspruch 1 zur Verhinderung der Ausbreitung von Wurzelfäule.

## Revendications

1. Dessoucheuse (50) comprenant un châssis (54) incorporant des moyens de couplage (53) pour coupler la dessoucheuse à une machine (52) et, supportés sur le châssis :
- des moyens de préhension (70) pour saisir une souche (38),
- une lame coupante (58) conçue pour couper vers le bas afin de sectionner les racines (46) autour de la souche (38),
- des moyens de force (56) pour déplacer les moyens de préhension (70) et la lame coupante (58) les uns par rapport aux autres au moins dans un sens essentiellement vertical, la lame coupante (58) étant conçue pour pouvoir se déplacer vers le bas par rapport aux moyens de préhension (70) et les moyens de préhension (70) étant conçus pour pouvoir se déplacer vers le haut par rapport à la lame coupante (56) de façon à soulever la souche (38) du sol (44),
dans laquelle
les moyens de préhension (70) pour saisir la souche (38) comprennent :
- deux moyens de préhension (70) disposés sur des côtés opposés de l'appareil (50) de façon à pivoter autour d'axes de pivotement essentiellement parallèles (67),
**caractérisée en ce que**
- les moyens de préhension (70) comprennent 5 à 20 pointes ou lames (72 à 75) conçues pour pénétrer dans et/ou sous la souche (38), les pointes ou lames d'un moyen de préhension étant disposées le long d'une distance dans le sens de son axe de pivotement, laquelle distance n'est pas inférieure à 400 mm, et
- **en ce qu'**un rebord (62) est soudé sur la lame coupante (58).

2. Dessoucheuse selon la revendication 1, **caractérisée en ce que** la lame coupante est conçue de façon à être au moins essentiellement fixe verticalement par rapport au châssis.

3. Dessoucheuse selon la revendication 1, **caractérisée en ce que** les moyens de préhension (70) sont conçus de façon à être au moins essentiellement fixes verticalement par rapport au châssis (54).

4. Dessoucheuse selon la revendication 1, **caractérisée en ce que** la lame coupante (58) comprend une lame qui est au moins essentiellement de forme cylindrique.

5. Dessoucheuse selon la revendication 1, **caractérisée en ce que** les moyens de force (56) sont fixés au châssis (54) et/ou
- aux moyens de préhension (70) ou
- à la lame coupante (58),
au moyen d'une jonction (57) qui permet aux moyens de force de se déplacer par rapport au châssis (54), aux moyens de préhension (70) ou à la lame coupante (58) dans une direction autre que la direction de la force créée par les moyens de force.

6. Dessoucheuse selon la revendication 1, **caractérisée en ce qu'**elle comprend en outre des moyens de pivotement (67, 68, 69) pour faire pivoter les moyens de préhension (70), par rapport au châssis (54), entre au moins deux positions, à savoir une position ouverte où les moyens de préhension (70) sont censés ne pas être en contact avec la souche (38), et une position fermée où les moyens de préhension (70) sont censés être en contact avec la souche (38) et avoir une prise sur la souche (38).

7. Dessoucheuse selon la revendication 6, **caractérisée en ce que** les moyens de pivotement comprennent des éléments d'articulation (67, 69) et des éléments de force (68) pour faire pivoter les moyens de préhension (70) par rapport au châssis (54).

8. Dessoucheuse selon la revendication 1, **caractérisée en ce que** les pointes ou lames (72 à 75) sont façonnées de façon à refendre la souche (38) et ainsi fendre la souche (38).

9. Dessoucheuse selon la revendication 1, **caractérisée en ce que** les pointes ou lames sont grossièrement dentées sur leur côté coupant.

10. Dessoucheuse selon la revendication 1, **caractérisée en ce que** deux lames (72 à 75) sont disposées au moins presque sur des côtés opposés de l'appareil (50) pour pivoter autour des axes de pivotement parallèles (67),
- de façon asymétrique de sorte que lesdites lames soient disposées pour se croiser en position fermée, ou
- de façon symétrique de sorte que lesdites lames soient disposées pour être alignées en position fermée.

11. Dessoucheuse selon la revendication 1, **caractérisée en ce que** les deux moyens de préhension comprennent tous deux pas moins de trois pointes ou lames (72 à 75) disposées pour être essentiellement fixes les unes par rapport aux autres.

12. Dessoucheuse selon la revendication 11, **caractérisée en ce que** les pointes ou lames (72 à 75) de l'un des moyens de préhension (70) sont disposées le long d'une distance, mesurée dans le sens de leur axe de pivotement (67), qui n'est pas inférieure à 600 mm ou pas inférieure à 800 mm.

13. Procédé de dessouchage (38) avec une dessoucheuse (50) couplée aux moyens d'élévation (52) d'une machine, des moyens de préhension (70) et une lame coupante (58) étant supportés par le châssis (54) de la dessoucheuse, procédé dans lequel :
- la dessoucheuse (50) est positionnée au-dessus de la souche (38) à l'aide des moyens d'élévation (52) de la machine,
- la souche (38) est fermement saisie par les moyens de préhension (70) au niveau des côtés de la souche (38), à pas moins de deux points sur la souche (38),
- la lame coupante (58) est positionnée à côté de la souche (38) dans une position au moins essentiellement verticale,
- la souche (38) est soulevée et les racines sortant de la souche sont sectionnées par un déplacement de la lame coupante (58) et des moyens de préhension (70) les uns par rapport aux autres, de sorte que la lame coupante (58) est abaissée par rapport aux moyens de préhension (70) et les moyens de préhension (70) déplacés vers le haut par rapport à la lame coupante (58),
- deux moyens de préhension (70) sur des côtés opposés de l' appareil (50) pivotent autour d'axes de pivotement (67) essentiellement parallèles,
**caractérisé en ce que**
- la souche (38) est fermement saisie par les moyens de préhension (70) au niveau des côtés de et/ou sous la souche (38) par l'enfoncement des pointes ou des lames (72 à 75) dans et/ou sous la souche au niveau de 5 à 20 points, et
- un rebord (62) soudé sur la lame coupante (58) empêche que la lame cylindrique (58) ne soit trop enfoncée dans le sol (44).

14. Procédé selon la revendication 13, **caractérisé en ce que**, dans ce procédé, la lame coupante est maintenue au moins essentiellement fixe dans le sens vertical par rapport au châssis.

15. Procédé selon la revendication 13, **caractérisé en ce que**, dans ce procédé, les moyens de préhension (70) sont maintenus au moins essentiellement fixes dans le sens vertical par rapport au châssis (54).

16. Procédé selon la revendication 13, **caractérisé en ce que**, dans ce procédé, la souche (38) est supportée contre la dessoucheuse, également par le haut.

17. Procédé selon la revendication 13, **caractérisé en ce que** les moyens de préhension incorporent des lames coupantes (48) et **en ce que**, dans ce procédé, les moyens de préhension (72 à 75) sont enfoncés si profondément dans la souche (38), au niveau de ses côtés, que la souche (38) est au moins partiellement fendue.

18. Procédé selon la revendication 13, **caractérisé en ce que** le relâchement de la souche (38) et le sectionnement des racines (46) sont réalisés en utilisant uniquement les moyens de force (56) propres à la dessoucheuse.

19. Utilisation d'une dessoucheuse (50) selon la revendication 1 pour empêcher la propagation du pourridié.
